# EUROPÄISCHE PATENTANMELDUNG

(11) **EP 2 279 789 A2**
(43) Veröffentlichungstag der Anmeldung: **02.02.2011**
(21) Anmeldenummer: 10007420.2
(22) Anmeldetag: 17.07.2010
(51) Int. Cl.: B01L 3/00, F16K 99/00

(54) **Vorrichtung zum Steuern des Durchflusses von Fluiden durch mikrofluidische Kanäle, Verfahren zu ihrem Betrieb und ihre Verwendung**

(30) Priorität: 30.07.2009 DE 102009035292
(71) Anmelder: Karlsruher Institut für Technologie, 76131 Karlsruhe (DE)
(72) Erfinder: Voigt, Achim, 76344 Eggenstein-Leopoldshafen (DE); Rapp, Bastian, 76137 Karlsruhe (DE); Carneiro, Leonardo, 30360690 Belo Horizonte (BR)

(57) **Zusammenfassung**

Die Erfindung betrifft eine Vorrichtung zum Steuern des Durchflusses von Fluiden durch *n* = *2^{m}* mikrofluidische Kanäle **9, 10, ..., 16,** wobei m eine natürliche Zahl > 0 ist und die Kanäle in ein Substrat **3** eingebracht und derart ausgestaltet sind, dass jeder Kanal jeweils m Kontaktstellen mit jeweils einem Heizelement **40-1**, **40-2**, ..., **45-4** aufweist, wobei
- für jeweils eine erste Hälfte der Kanäle das mit dem jeweiligen Kanal in Kontakt stehende Heizelement für jede der m Kontaktstellen durch eine erste Leiterbahn **40, 42, 44** verbunden ist,
- für die jeweils andere Hälfte der Kanäle das mit dem jeweiligen Kanal in Kontakt stehende Heizelement für jede der m Kontaktstellen durch eine zweite Leiterbahn **41, 43, 45** verbunden ist,
- jeweils eine der m ersten Leiterbahnen **40, 42, 44** und eine der m zweiten Leiterbahnen **41, 43, 45,** paarweise zusammengefasst **40 - 41, 42 - 43, 44 - 45,** über eine Steuerleitung 50, **51, 52** angesteuert werden, wobei für jede der Steuerleitungen **50, 51, 52** entweder der Schaltzustand TRUE oder der Schaltzustand FALSE einstellbar ist, und
- die Leiterbahnen **40, 41, ... 45** und Heizelemente **40-1**, **40-2**, **..., 45-4** sich auf einer Platine **2** befinden, die an ein Kühlelement **8** angrenzt.

Die Erfindung betrifft weiterhin ein Verfahren zum Betrieb der Vorrichtung und ihre Verwendung zur Führung von Flüssigkeiten, insbesondere wässrige Lösungen, Mittler- oder Trennmedien, für Anwendungen in der Medizintechnik oder Biotechnologie.

## Beschreibung

Die Erfindung betrifft eine Vorrichtung zum Steuern des Durchflusses von Fluiden durch mikrofluidische Kanäle, ein Verfahren zu ihrem Betrieb und ihre Verwendung.

In vielen Anwendungen von mikrofluidischen Systemen ist es erforderlich, eine sehr hohe Anzahl von mikrofluidischen Kanälen zu steuern, um verschiedene Analyse- oder Syntheseschritte in einem System oder einem Prozess zu steuern.

In der DE 10 2007 032 951 A1 wird ein mikrofluidischen System offenbart, das sich eines Mittlermediums bedient. Solche als indirekte mikrofluidische Systeme bezeichneten Aufbauten sind vor allem durch ihre Einwegtauglichkeit und die Möglichkeit, teuere mikrofluidische Komponenten kontaminationsfrei betreiben zu können, für Anwendungen in kritischen analytischen Anwendungen, z.B. für die biomedizinische Technik, geeignet. Solche Systeme benötigen allerdings eine große Anzahl von 2/2-Wege-Ventilen, also Ventilen, die einen mikrofluidischen Kanal versperren oder freigeben. Die Zahl zu steuernder Kanäle kann dabei leicht über einige Dutzend bis Hundert hinausgehen.

Solche Systeme sind weder durch kleine implementierte konventionelle Ventile und auch nicht durch direkt anzusteuernde Mikroventile robust zu betreiben, da die Steuerungstechnik bei einer so großen Anzahl von Ventilen sehr komplex wird. Darüber hinaus steigt auch die Baugröße solcher Systeme sehr schnell unverhältnismäßig an.

Die US 6575188 B2, die EP 0 368 306 B1 und die EP 0 731 303 B1 beschreiben einzelne thermische Ventilzellen, die jeweils eine Wärmequelle und ein Wärmesenke besitzen. Das Öffnen und Schließen eines mikrofluidischen Kanals wird durch das selektive Ein- und Ausschalten der Wärmequelle bzw. der Wärmesenke durchgeführt. Zum Ausschalten wird der mikrofluidische Kanal in einem definierten Bereich durch lokales Einfrieren verschlossen und zum Einschalten durch lokale Erwärmung und damit einhergehendes Schmelzen der Vereisung wieder geöffnet.

Diese Systeme setzen eine 1-zu-1 Steuerung voraus, d. h. die Ventile werden jeweils einzeln geöffnet und wieder geschlossen, so dass jedem Ventil eine eigene Steuerleitung zugeordnet werden kann. Der Vorteil im Vergleich zu Systemen, die auf bewegten mechanischen Komponenten wie Membranen oder Piezoaktoren basieren, besteht darin, dass die thermischen Ventile passiv arbeiten, wodurch sie viel robuster, weniger fehleranfällig und damit stabiler im Betrieb sind. Vor allem in Bezug auf Fertigungstoleranzen und Passungen sind thermische Ventile der herkömmlichen Ventiltechnik überlegen. Die Erzeugung des blockierenden Volumens erfolgt intrinsisch passgenau, damit sind keine Undichtigkeiten der Ventile durch ungenaue Formpassungen möglich, was insbesondere bei miniaturisierten mikrofluidischen Ventilen in konventioneller Bautechnik ein großes Problem darstellt. Insbesondere ist ein Ventil so ausgeführt, dass Wärmequelle und -senke vom mikrofluidischen Kanal entkoppelt sind. Der mikrofluidische Kanal ist dann für sich abgeschlossen und auf einer separaten Komponente ausgeführt, Wärmequelle und -senke können wieder verwendet werden, wenn der mikrofluidische Kanal entsorgt wird, beispielsweise weil er verunreinigt oder verschlossen ist. Darüber hinaus sind diese Ventile auch günstiger in der Herstellung, da sie keine eigentlichen Ventilkomponenten besitzen. Die Ventilfunktion wird vielmehr durch bereits im System vorliegende Stoffe, nämlich dem Inhalt des mikrofluidischen Kanals realisiert. Ein weiterer Vorteil dieser Systeme liegt darin, dass sie unabhängig vom gewählten Material des mikrofluidischen Kanals sind. Das Material kann an die jeweils geforderte Anwendung angepasst werden und kann, beispielsweise in Kunststoff, Keramik oder Silizium ausgeführt sein. Unabhängig von der Wahl des Materials ist die beschrieben thermische Ventiltechnik auf alle Materialien übertragbar, da das Ventil lediglich den Inhalt des Kanals für die Ventilfunktion ausnutzt.

Im beschriebenen Zustand können thermische Ventile eingesetzt werden, um an bestimmten Stellen in mikrofluidischen Systemen Kanäle zu verschließen oder zu öffnen. Ist die Anzahl der zu steuernden Kanäle allerdings sehr groß (im Bereich Hunderte bis Tausende), so würden sich thermische Ventile genauso wenig eignen wie jedes andere Ventil, welches auf 1-zu-1 Steuerung ausgelegt ist. Der Steueraufwand für ein solches System ist einfach zu groß.

In der US 7143785 B2 wird ein fluidischer Multiplexer auf der Basis von Membranventilen offenbart, der über Druckluft angesteuert wird. Darüber hinaus sind aus der US 3599525 A, der US 5775371 A, und der US 6202687 B1 Systeme, die sehr komplexe Steuerungsaufgaben über Druckluftsteuerung durchführen können, bekannt. Nachteilig hieran ist, dass das Konzept des Multiplexens zwar eine Reduktion der Steuerleitungen ermöglicht, gleichzeitig aber intrinsisch die Anzahl an real existierenden Ventilen erhöht. Beispielsweise ergeben sich für einen 3bit fluidischen Multiplexer eine Anzahl von 8 steuerbaren mikrofluidischen Kanälen. Diese Kanäle weisen aber jeweils drei Kreuzungspunkte mit den Steuerleitungen auf, an denen der Kanal schaltbar ausgeführt werden soll. Jeder dieser Kreuzungspunkte stellt somit effektiv ein einzelnes Ventil dar. Damit ergibt sich für einen *3bit* fluidischen Multiplexer eine Gesamtsumme an 3 x 8 = 24 einzelnen Ventilen. Werden diese Ventile als konventionelle mikromechanische Ventile ausgeführt, so wird die Zahl der notwendigen Ventile im Vergleich zu einer 1-zu-1 Steuerung verdreifacht. Bei einer höheren Anzahl an Steuerleitungen multipliziert sich dieser Wert noch weiter. Ein weiterer Nachteil der Druckluftsteuerung liegt darin, dass das eigentliche Ventil nicht allein durch die mikrotechnisch ausgeführte Ventilkomponente dargestellt wird. Die Druckbeaufschlagung der fluidischen Ventile muss wiederum durch ein pneumatisches Ventil gesteuert werden, wodurch sich die Zahl real existierender Ventile weiter erhöht, vor allem weil die beiden Ventiltypen, d.h. fluidische Ventile in der mikrofluidischen Komponente und pneumatische Ventile außerhalb der fluidischen Komponente, unterschiedlicher Bauart sind. Die beschriebenen mikrotechnischen Ventile sind darüber hinaus nur in sehr wenigen Materialien herstellbar. Sie verlangen ein sehr weiches Material, insbesondere ein weiches Polymer, z.B. Polydimethylsiloxan (PDMS). Erfordert die Anwendung ein anderes Material, z.B. ein Metall oder eine Keramik, so lässt sich die Ventilfunktion nicht auf diese Weise herstellen.

Ein fluidischer Multiplexer in klassischer Ventiltechnik erhöht somit die Fehleranfälligkeit des Systems erheblich, da für jedes einzelne Ventil eine gewisse Wahrscheinlichkeit besteht, dass es nach dem Fertigungsprozess fehlerhaft ist. Für den in der US 7143785 B2 beschriebenen fluidischen Multiplexer ist eine Gesamtsumme von über 2000 einzelnen mikromechanischen Ventilen notwendig, d.h. bei einer Ausschussrate von nur 0,1 % wären dies bereits 2 Ventile auf diesem System. Hierbei gilt zu beachten, dass bereits ein fehlerhaftes Ventil den gesamten Multiplexer außer Funktion setzt. Die Verringerung der Komplexität in der Ansteuerung wird also nur auf Kosten der Zuverlässigkeit des Systems erkauft.

Darüber hinaus besitzen alle beschriebenen fluidischen Multiplexer ein Problem: Die Struktur der Ventile und der Aktorik ist intrinsisch mit der mikrofluidischen Struktur verbunden. Soll die mikrofluidische Kanalstruktur entsorgt werden, z.B. weil die Struktur kontaminiert oder verstopft ist, muss damit immer auch die gesamte Aktorik entsorgt werden, da diese fest mit der mikrofluidischen Struktur verbunden ist. Diese Bedingung verringert die Zuverlässigkeit dieser Systeme weiter und macht sie vor allem für Anwendungen ungeeignet, die ein häufiges Auswechseln der Kanalstruktur erfordern, insbesondere biomedizinische Anwendungen, die verlangen, dass alle Systemkomponenten, die einmal in Kontakt mit einem Analyten standen, nach jeder Messung ausgewechselt werden müssen.

Ausgehend hiervon ist es die Aufgabe der vorliegenden Erfindung, eine Vorrichtung zum Steuern des Durchflusses von Fluiden durch mikrofluidische Kanäle, ein Verfahren zu ihrem Betrieb und ihre Verwendung vorzuschlagen, die die genannten Nachteile und Einschränkungen nicht aufweisen.

Insbesondere soll eine Vorrichtung bereitgestellt werden, die es ermöglicht, eine große Anzahl von mikrofluidischen Kanälen mit einer möglichst geringen Anzahl von Steuerleitungen zu steuern.

Diese Aufgabe wird im Hinblick auf die Vorrichtung durch die Merkmale des Anspruchs 1, im Hinblick auf das Verfahren durch die Verfahrensschritte des Anspruchs 6 und im Hinblick auf die Verwendung durch den Anspruch 8 gelöst. Die Unteransprüche beschreiben jeweils vorteilhafte Ausgestaltungen der Erfindung.

Eine erfindungsgemäße Vorrichtung zum Steuern des Durchflusses von Fluiden durch n *= 2^{m}* mikrofluidische Kanäle, wobei m eine natürliche Zahl > 0 ist, ist in ein Substrat eingebracht und derart ausgestaltet, dass jeder Kanal jeweils m Kontaktstellen mit jeweils einem Heizelement aufweist. Die Heizelemente sind bevorzugt als Ohmscher Widerstand oder als Diode ausgestaltet.

Hierbei ist für jeweils die erste Hälfte der Kanäle das mit diesem Kanal in Kontakt stehende Heizelement für jede der m Kontaktstellen durch eine erste Leiterbahn mit jeweils einem Heizelement der anderen Kanäle verbunden und für die jeweils andere Hälfte der Kanäle das mit diesem Kanal in Kontakt stehende Heizelement für jede der m Kontaktstellen durch eine zweite Leiterbahn mit jeweils einem Heizelement der anderen Kanäle verbunden. Vorzugsweise sind die Kanäle derart ausgestaltet sind, dass sie an einer Kontaktstelle gegen die Platine geöffnet oder mittels einer dünnen Wand, die eine geringe thermische Kapazität aufweist, gegenüber der Platine abgeschlossen sind.

Weiterhin bilden jeweils eine erste Leiterbahn und eine zweite Leiterbahn, paarweise zusammengefasst, jeweils eine Steuerleitung, für die entweder nur der Schaltzustand TRUE oder nur der Schaltzustand FALSE einstellbar ist.

Fluidische Multiplexer ermöglichen es, über eine kleine Anzahl von Steuerleitungen eine große Anzahl von fluidischen Kanälen zu schalten. Sie bedienen sich dabei eines Konzeptes, das aus der Elektronik bekannt ist. Multiplexer beschalten eine große Anzahl von Signalleitungen mit einer kleinen Anzahl von Steuerleitungen, wobei die beiden Größen in exponentiellem Zusammenhang zueinander stehen:
Anzahl Signalleitungen = 2 hoch (Anzahl Steuerleitungen)

Ein *3bit* fluidischer Multiplexer wäre somit in der Lage 2³ = 8 mikrofluidische Kanäle zu schalten, ein *10bit* fluidischer Multiplexer sogar 2¹⁰ = 1024. Das Konzept lässt sich mühelos auf eine beliebige Anzahl von Steuerleitungen erweitern, womit sich mühelos Tausende von mikrofluidischen Kanälen steuern lassen.

Schließlich befinden sich die Leiterbahnen und die Heizelemente auf einer Platine, die an ein Kühlelement angrenzt. Das Kühlelement liegt bevorzugt in Form einer Kühlrippenstruktur mit einer angeschlossenen Heatpipe, eines Ventilationssystems oder eines Peltier-Elements vor.

Eine erfindungsgemäße Vorrichtung lässt sich mit dem folgenden Verfahren betreiben.

Erfindungsgemäß wird eine passive Umsetzung eines mikrofluidischen Multiplexers, der auf thermischer Ventiltechnik beruht, vorgeschlagen. Die Funktion des *Öffnens* und des *Schließens* eines mikrofluidischen Kanals wird dabei nicht durch eine mechanisch bewegliche, eventuell mikrotechnisch hergestellte Komponente realisiert, sondern durch das lokale Einfrieren und Öffnen eines Kanals mittels einer Wärmequelle und einer Wärmesenke.

Das erfindungsgemäße Verfahren zum Steuern des Durchflusses eines Fluids durch *n* = *2^{m}* mikrofluidische Kanäle, wobei m eine natürliche Zahl > 0 ist und die Kanäle in ein Substrat eingebracht sind, weist die Schritte a) bis c) auf.

Gemäß Schritt a) werden zunächst die mikrofluidischen Kanäle an ihren Kontaktstellen mit den Heizelementen eingefroren. Die Kontaktstellen bilden somit jeweils ein Verschlusselement für die mikrofluidischen Kanäle aus.

Dann wird gemäß Schritt b) ein digitales Signal an die Steuerleitungen, wobei jede Steuerleitung nur entweder den Schaltzustand TRUE oder FALSE annimmt, so dass nur jeweils eine der beiden zugeordneten Leiterbahnen unter Spannung steht, angelegt. Nur, wenn jeder der Kreuzungspunkte des jeweiligen Kanals mit jeder der Steuerleitungen durch Anlegen des Schaltzustands TRUE geöffnet ist, taut ein Heizelement am betreffenden Kreuzungspunkt an seiner Kontaktstelle den mikrofluidischen Kanal auf und der betreffende mikrofluidische Kanal öffnet sich, wodurch sich ein Fluss vom Einlass des jeweiligen mikrofluidischen Kanals zum Auslass des jeweiligen mikrofluidischen Kanals ausbilden könnte.

Gemäß Schritt c) wird schließlich bevorzugt durch eine oder mehrere externe Pumpen ein Fluss vom Einlass des jeweiligen mikrofluidischen Kanals zum Auslass des jeweiligen mikrofluidischen Kanals angelegt.

Eine erfindungsgemäße Vorrichtung lässt sich einsetzen für die Schaltung von hoch komplexen Mikrofluidiken mit Hunderten bis Tausenden von mikrofluidischen Kanälen.

Daneben eignet sich diese Vorrichtung auch für die Steuerung von Gasflüssen. Ist der fluidische Multiplexer in Betrieb und wurde eine der genannten zu schaltenden mikrofluidischen Kanäle geöffnet, so kann durch diesen Kanal nicht nur eine Flüssigkeit, sondern auch ein Gas gefördert werden.

Die Erfindung weist insbesondere die im Folgenden erwähnten Vorteile auf.

Die erfindungsgemäße Vorrichtung übertrifft durch den, dem Multiplexen intrinsischen exponentiellen Zusammenhang zwischen Steuerleitungen und mikrofluidischen Kanälen, jedes Ventil, das durch Einzelsteuerung betrieben wird. Komplexe mikrofluidische Systeme, die durch Ventile in Einzelbetriebsteuerung beschaltet werden, können nicht in dieser Kompaktheit umgesetzt werden; alleine die Vielzahl an Zuleitungen für die Ventilsteuerung würde das System inakzeptabel vergrößern.

Für die erfindungsgemäße Vorrichtung ist keine Aktorik notwendig, es werden keine mechanisch bewegten Komponenten, keine zu deflektierende Membrane oder ähnliches benötigt. Die Vorrichtung beruht vielmehr auf rein passiver thermischer Ventiltechnik, was die in der Herstellung sehr preiswert und im Betrieb sehr robust macht.

In der erfindungsgemäßen Vorrichtung sind die mikrofluidische Kanalstruktur und die eigentliche Ventillogik voneinander getrennt ausgestaltet. Beide Komponenten können somit getrennt voneinander ausgeführt werden, ihre jeweiligen Herstellungsprozesse getrennt optimiert werden. Funktioniert eine der beiden Komponenten, so kann jeweils die andere beibehalten werden. Dies ist vor allem daher interessant, weil die mikrofluidische Struktur, vor allem wenn sie für biomedizinische Anwendungen eingesetzt werden soll, häufig ausgetauscht werden muss. Sie macht aber nun den geringsten Teil der Kosten des Gesamtsystems aus, die eigentlichen Kosten entstehen durch die Ventillogik, d.h. Wärmequellen und -senken sowie deren Ansteuerung, die sich aber wieder verwenden lässt, da sie im Betrieb nicht kontaminiert.

Die erfindungsgemäße Vorrichtung ist beliebig skalierbar: Für die Herstellung von Wärmequellen auf elektronischen Schaltungen existieren bereits heute eine Vielzahl von Fertigungsprozessen (z. B. Siebdruck von Widerständen), die nicht auf eine bestimmte Fläche beschränkt ist (Endlos- oder Offsetdruck). Für die Wärmesenken gilt ähnliches. Somit ist das System auf eine beliebige Anzahl mikrofluidischer Kanäle expandierbar, ohne einer fertigungstechnischen Beschränkung zu unterliegen.

Es sind keine besonderen physikalischen Rahmenbedingungen notwendig, insbesondere wird keine Druckluft benötigt. Lediglich Strom für die Heizelemente und einen Peltier-Block als Kältequelle ist erforderlich.

Ein weiterer Vorteil besteht darin, dass das Wärmemanagement im geöffneten Zustand des Ventils sehr genau bekannt ist, da die Temperatur des Heizelementes bekannt ist, wenn geeignete Heizelemente, bevorzugt ein Widerstand mit bekannter Temperatur-Widerstands-Kennlinie, z. B. ein Halbleiter PTC oder ein Platin-Heizelement, eingesetzt wird. Die exakte Temperierung der geführten Flüssigkeiten stellt einen Mehrwert dar.

Die Erfindung wird im Folgenden anhand von Ausführungsbeispielen und den Figuren näher erläutert. Es zeigen:
- **Fig. 1**: Aufbau einer einzelnen thermischen Ventilzelle;
- **Fig. 2**: Ventilzelle im *geschlossener Zustand;*
- **Fig. 3**: Ventilzelle im geöffneten *Zustand;*
- **Fig. 4**: Funktionsweise eines 3bit fluidischen Multiplexer;
- **Fig. 5**: Aufbau eines 3bit fluidischen Multiplexers;
- **Fig. 6**: 3bit fluidischen Multiplexers im *geschlossenen Zustand;*
- **Fig. 7**: 3bit fluidischen Multiplexers nach Anlagen des digita- len Steuersignals 101;
- **Fig. 8**: wie Fig. 7, mit Darstellung der vereist bleibenden Be- reiche.

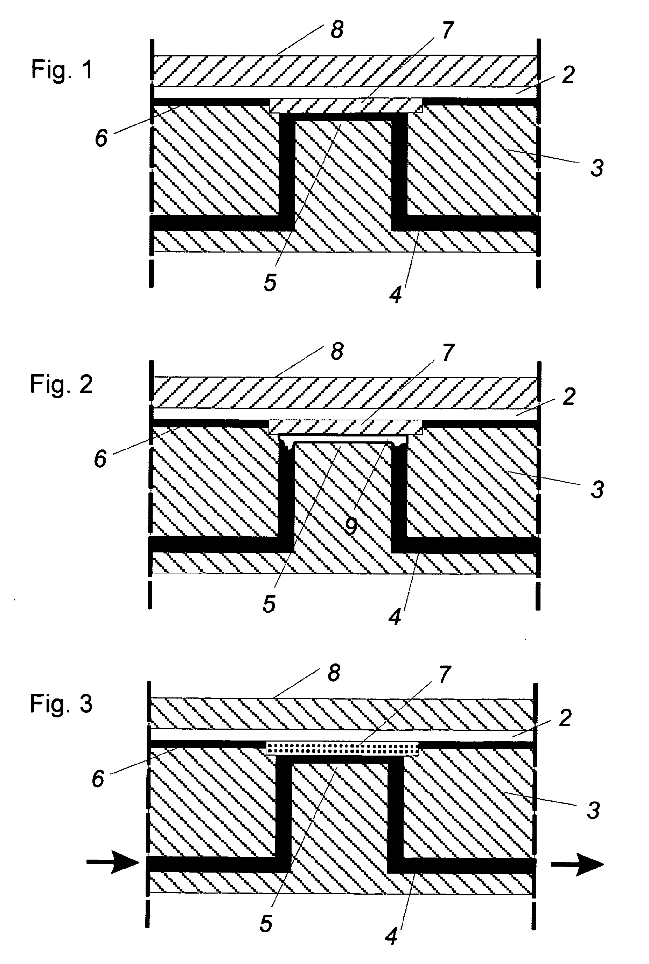

**Fig.** 1 zeigt schematisch den Aufbau einer einzelnen thermischen Ventilzelle. Die Ventilzelle besteht aus einem mikrofluidischen Kanal **4,** der in einen mikrofluidischen Körper **3,** der vorzugsweise aus einem Polymer, aus Silizium, aus Keramik, aus Glas oder aus einem Metall besteht, eingebettet ist. Im Kanal **4** werden Flüssigkeiten geführt, insbesondere wässrige Lösungen, Mittler- oder Trennmedien, wie sie für Anwendungen in der Medizintechnik oder der Biotechnologie erforderlich sind. Kanal **4** ist derart in drei Dimensionen ausgeführt, dass er auf einer Kontaktstelle (Kontaktzone) **5** zur Umgebung geöffnet oder mittels einer dünnen Wand, die eine geringe thermische Kapazität aufweist, so abgeschlossen ist, dass er vorzugsweise eine ebene Fläche aufweist. An der Kontaktstelle **5** befindet sich auf dem Körper **3** eine Platine **2,** bevorzugt eine Leiterplatte, die so ausgestaltet ist, dass der thermische Übergang zwischen der Platine **2** und dem Körper **3** möglichst gering ist. Auf der Platine **2** befindet sich mindestens eine Leiterbahnstruktur **6,** die an der Kontaktstelle **5** ein mit der Leiterbahnstruktur **6** elektrisch verbundenes Heizelement **7** aufweist, das als lokale Wärmequelle in der Ventilzelle dient und insbesondere als Ohmscher Widerstand oder als Diode ausgestaltet ist.

Auf der Rückseite der Platine **2** befindet sich vorzugsweise in flächiger Bauweise ein Kühlkörper **8,** der als Wärmesenke in der Ventilzelle dient. Ein derartiger Kühlkörper besteht bevorzugt in einer Kühlrippenstruktur mit einer angeschlossenen Heatpipe, einem Ventilationssystem oder einem Peltier-Element. Alternativ wird eine physikalische oder chemische Kältequelle, z.B. eine endotherme Reaktion, Kühlbehälter mit flüssigem Stickstoff oder einem anderen Gas, eingesetzt. Der Kühlkörper **8** ist derart auf der Platine **2** aufgesetzt, dass die beiden Komponenten einen möglichst geringen thermischen Widerstand zueinander ausbilden.

Die erfindungsgemäße thermische Ventilzelle wird, wie in den **Fig. 2 und 3** beispielhaft dargestellt, betrieben. Die Ventilzelle stellt ein Ventil des Typs dar, das in seinem *Normalzustand geschlossen* ist. Dadurch erfolgt der Wärmeeintrag sehr viel schneller als der Wärmeaustrag, so dass das Ventil im Einschaltvorgang schneller ist.

In **Fig. 2** ist schematisch der *geschlossene Zustand* einer einzigen thermischen Ventilzelle dargestellt. Während des geschlossenen Zustands der Ventilzelle bleibt der Kühlkörper **8** in konstantem Betrieb, während das Heizelement **7** ausgeschaltet ist. Dadurch kommt es an der Kontaktstelle **5** des Kanals **4,** die sich an dieser Stelle dem Kühlkörper **8** am nächsten befindet, zu einer lokalen Vereisung des Kanals **4,** wodurch die durch den Kanal **4** geführte Flüssigkeit eingefroren wird und damit als passgenaues Verschlusselement **9** des Kanals **4** dient.

Wie in **Fig. 3** gezeigt, wird, um die Ventilzelle zu öffnen, das Heizelement **7** über die elektrische Leiterbahnstruktur **6** mit Strom beaufschlagt, wodurch es sich erhitzt. Dadurch wird das in **Fig. 2** dargestellte ausgebildete Verschlusselement **9,** das sich aufgrund der lokalen Vereisung des Kanals **4** an der Kontaktstelle **5** ausbildete, aufgelöst, wobei die Wärmeabfuhr aus der Kontaktstelle **5** durch den Kühlkörper **8** kompensiert wird. Der mikrofluidische Kanal **4** ist dadurch wieder geöffnet und die Flüssigkeit kann das Ventil durchfließen.

Ausgehend vom Aufbau einer einzelnen thermischen Ventilzelle wird im Folgenden das Konzept des fluidischen Multiplexens beispielhaft beschrieben, das das freie Beschalten einer Vielzahl von fluidischen Kanälen ermöglicht. Das Konzept des Multiplexens ist aus der Elektronik bekannt. Multiplexer werden dazu eingesetzt, um eine große Anzahl von Signalleitungen mit einer geringen Anzahl an Steuerleitungen zu beschalten. Dabei gilt der exponentielle Zusammenhang, dass sich mit n Steuerleitungen 2ⁿ Signalleitungen beschalten lassen. Im Falle eines *3bit*-Multiplexers ist so die Steuerung von 2³=8 Signalleitungen möglich, bei einem *10bit*-Multiplexers bereits die Steuerung von 2¹⁰=1024 Signalleitungen. Ein mikrofluidischer Multiplexer leistet Vergleichbares für die Fluidik. Eine Signalleitung entspricht hierbei einem zu steuernden mikrofluidischem Kanal, z. B. Kanal **4** aus **Fig. 1****.** Die folgenden Beispiele werden anhand eines 3bit fluidischen Multiplexers beschrieben, das hier zugrunde liegende Konzept ist jedoch auf jede Anzahl von Steuerleitungen, insbesondere 10 Bit und mehr, übertragbar.

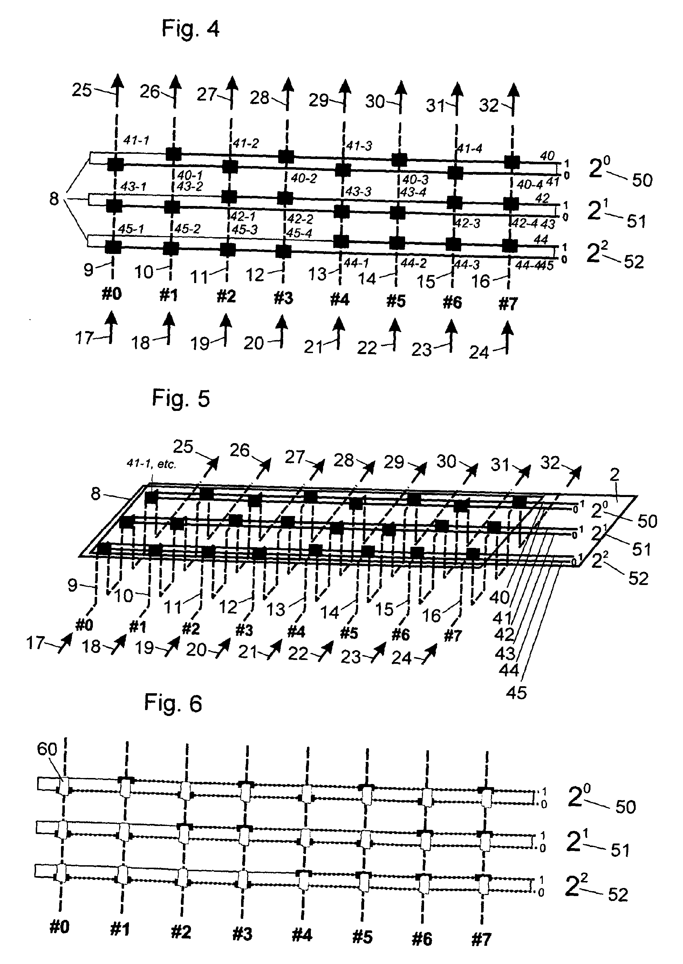

**Fig. 4** zeigt schematisch den Aufbau eines 3bit fluidischen Multiplexers, der zunächst aus den gleichen Komponenten, wie sie für die einzelne thermische Ventilzelle in **Fig. 1** beschrieben wurden, besteht. Diese Anordnung enthält ebenfalls einen Kühlkörper **8,** einen mikrofluidischen Körper **3** (hier nicht dargestellt) und eine Platine **2** (hier nicht dargestellt), worauf sich hier allerdings nicht nur ein einzelnes Heizelement 7 auf einer einzelnen Leiterbahnstruktur **6** befindet, sondern eine Vielzahl von Heizelementen **40-1 bis 40-4, 41-1 bis 41-4, 42-1 bis 42-4, 43-1 bis 43-4, 44-1 bis 44-4 und 45-1 bis 45-4,** die hier über insgesamt 6 einzelne Leiterbahnen **40 bis 45** verteilt sind, die jeweils paarweise (Leiterbahnen **40, 41** bzw. **42, 43** bzw. **44, 45)** zusammengefasst werden.

Die Elemente **40 bis 45** der genannten Paare sind jeweils einem logischen Schaltzustand zugeordnet: Die Leiterbahnen **40, 42, 44** bilden die logischen TRUE Leitungen, während die Leiterbahnen **41, 43, 45** die logischen FALSE Leitungen bilden. Jeweils eine logische TRUE Leitung und eine logisch FALSE Leitung ergeben in Summe eine Steuerleitung: Die Leitungen **40, 41** bilden die 2⁰ Steuerleitung **50,** die Leitungen **42, 43** die 2¹ Steuerleitung **51,** während die Leitungen **44, 45** die 2² Steuerleitung **52** bilden.

Die Steuerleitungen **50 bis 52** kennen jeweils den logischen Schaltzustand TRUE oder FALSE. Damit sich z.B. die Steuerleitung 2⁰ im Zustand TRUE befindet, muss die Leiterbahn **40** mit Strom beaufschlagt werden, in Folge würden die Heizelemente **40-1 bis 40-4** heizen. Damit sich die Steuerleitung 2⁰ jedoch im Zustand FALSE befindet, muss die Leiterbahn **41** mit Strom beaufschlagt werden, in Folge würden die Heizelemente **41-1 bis 41-4** heizen. Eine Steuerleitung **50 bis 52** kann so immer nur entweder den Schaltzustand TRUE oder FALSE darstellen, niemals beide; somit ist immer nur jeweils eine der beiden zugeordneten Leiterbahnen unter Spannung.

Im Unterschied zur einzelnen thermischen Ventilzelle besitzt der 3bit fluidische Multiplexer auch eine erhöhte Anzahl an zu schaltenden mikrofluidischen Kanälen, nämlich 2³ = 8 Kanäle **9 bis 16,** die auch mit **#0 bis #7** bezeichnet werden. Jeder der Kanäle **9 bis 16** weist einen entsprechend ausgeführten Zufluss **17 bis 24** und einen entsprechend ausgeführten Abfluss **25 bis** 32 auf. Die Anordnung ist so ausgeführt, dass die einzelnen mikrofluidischen Kanäle **9 bis 16** analog zu der in Fig. **1** dargestellten thermischen Kontaktstelle **5** zwischen dem Kanal **4** und dem Kühlkörper **8** sowie der elektrischen Leiterbahnstruktur **6** liegen. Weiterhin ist der Körper des 3bit fluidischen Multiplexers so ausgeführt, dass die in **Fig. 4** dargestellte dreigeteilte Kontaktzone an den Kühlkörper **8** koppelt.

**Fig. 5** zeigt schematisch eine dreidimensionale Ausführung des 3bit fluidischen Multiplexes, die analog zum Aufbau der einzelnen thermischen Ventilzelle ist. Zusätzlich zu **Fig. 4** sind hier der Kühlkörper **8** und die Platine **2** dargestellt.

Im Folgenden wird der Betrieb der erfindungsgemäßen Anordnung am Beispiel eines 3bit fluidische Multiplexers beschrieben.

In **Fig. 6** ist der 3bit fluidische Multiplexer im geschlossenen Normalzustand dargestellt. Hierzu wird in Analogie zum Betrieb der einzelnen thermischen Ventilzelle der Kühlkörper **8** konstant betrieben, während die einzelnen mikrofluidischen Kanäle 9, 10 an ihren Kontaktstellen mit der Wärmequelle, d.h. jeweils an den Punkten, an denen die Wärmequellen **40-1 bis 40-4, 41-1 bis 41-4, 42-1 bis 42-4, 43-1 bis 43-4, 44-1 bis 44-4** und **45-1 bis 45-4** angeordnet sind, einfrieren und somit durch lokale Vereisung jeweils ein Verschlusselement 60 ausbilden.

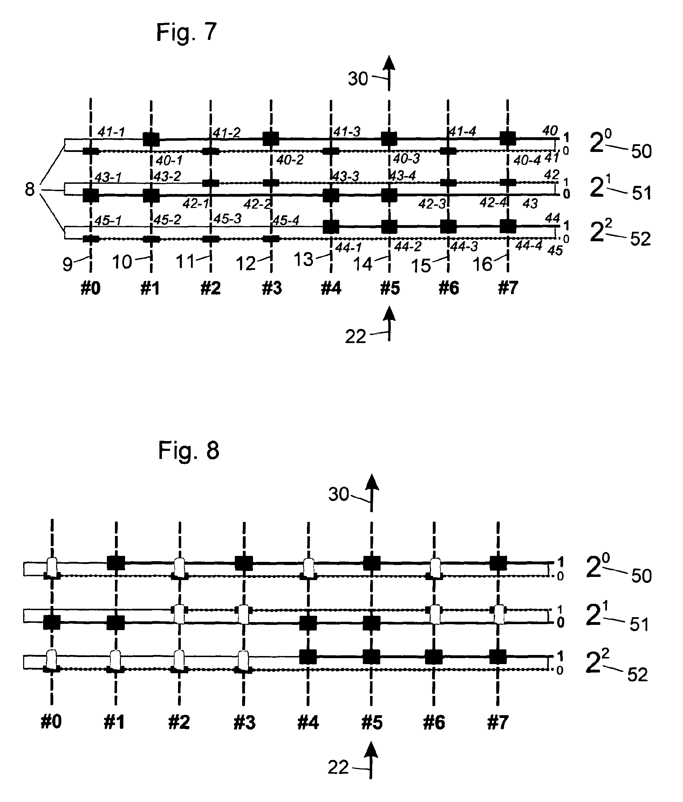

In **Fig.** 7 ist dargestellt, wie sich durch Anlegen eines digitalen Signals an die 2⁰ bis 2² Steuerleitungen **50 bis 52** einer der mikrofluidischen Kanäle **9 bis 16** öffnen lässt. Hierzu wird das binäre Signal 101, entsprechend der Zahl 5 in Dezimalnotation, als Beispiel eingesetzt. Hierzu wird an die 2² Steuerleitung **52** ein logisches TRUE, an die 2¹ Steuerleitung **51** ein logisches FALSE und an die 2⁰ Steuerleitung **50** ein logisches TRUE angelegt. Damit werden die Leiterbahnen **40, 43 und 44** unter Spannung gesetzt und die hieran angeschlossenen Heizelemente **40-1 bis 40-4, 43-1 bis 43-4 sowie 44-1 bis 44-4** erwärmen sich.

**Fig. 8** zeigt, was geschieht, wenn oberhalb der erwärmten Heizelemente die lokale Vereisung geschmolzen und die mikrofluidischen Kanäle in diesem Bereich wieder durchgängig werden. Jeder mikrofluidische Kanal muss dabei alle drei Steuerleitungen **50 bis 52** passieren. Nur wenn jeder der Kreuzungspunkte des jeweiligen Kanals mit jeder der drei Steuerleitungen geöffnet ist, kann sich ein Fluss vom Einlass des jeweiligen mikrofluidischen Kanals zum Auslass des jeweiligen mikrofluidischen Kanals einstellen. Durch den Aufbau des fluidischen Multiplexers ist gewährleistet, dass nur ein einzelner mikrofluidischer Kanal - im in Fig. 7 skizzierten Fall der Kanal **14** oder #5, analog zum digitalen Steuersignal 101 - an allen drei Kreuzungspunkten geöffnet ist. Alle verbliebenen mikrofluidischen Kanäle sind an mindestens einem der Kreuzungspunkte zwischen dem jeweiligen Kanal und einer der Steuerleitungen **50 bis 52** noch vereist und damit geschlossen.

Eine solche Anordnung ist somit in der Lage über eine rein passive Vorrichtung eine nahezu beliebige Anzahl von mikrofluidischen Kanälen zu beschalten. Im Vergleich zur einzelnen thermischen Ventilzelle, bei der jeder einzelnen Ventilzelle eine einzelne Steuerleitung zugeordnet wird, besitzt der mikrofluidische Multiplexer den großen Vorteil, dass die Anzahl an steuerbaren mikrofluidischen Kanälen exponentiell zunimmt: Jede weitere Steuerleitung verdoppelt die Anzahl steuerbarer Kanäle. Eine solche Komplexität lässt sich durch eine einfache 1-zu-1-Steuerung, wie sie in nahezu allen mikrofluidischen Ventilsystemen implementiert ist, nicht erreichen.

## Patentansprüche

1. Vorrichtung zum Steuern des Durchflusses von Fluiden durch n *= 2^{m}* mikrofluidische Kanäle (9, 10, ..., 16), wobei m eine natürliche Zahl > 0 ist und die Kanäle in ein Substrat (3) eingebracht und derart ausgestaltet sind, dass jeder Kanal jeweils m Kontaktstellen mit jeweils einem Heizelement (40-1, 40-2, ..., 45-4) aufweist, wobei
- für jeweils eine erste Hälfte der Kanäle das mit dem jeweiligen Kanal in Kontakt stehende Heizelement für jede der m Kontaktstellen durch eine erste Leiterbahn (40, 42, 44) verbunden ist,
- für die jeweils andere Hälfte der Kanäle das mit dem jeweiligen Kanal in Kontakt stehende Heizelement für jede der m Kontaktstellen durch eine zweite Leiterbahn (41, 43, 45) verbunden ist,
- jeweils eine der m ersten Leiterbahnen (40, 42, 44) und eine der m zweiten Leiterbahnen (41, 43, 45), paarweise zusammengefasst (40 - 41, 42 - 43, 44 - 45), über eine Steuerleitung (50, 51, 52) angesteuert werden, wobei für jede der Steuerleitungen (50, 51, 52) entweder der Schaltzustand TRUE oder der Schaltzustand FALSE einstellbar ist, und
- die Leiterbahnen (40, 41, ... 45) und Heizelemente (40-1, 40-2, ..., 45-4) sich auf einer Platine (2) befinden, die an ein Kühlelement (8) angrenzt.

2. Vorrichtung nach Anspruch 1, wobei die Kanäle (9, 10, ..., 16) derart ausgestaltet sind, dass sie an einer Kontaktstelle gegen die Platine (2) geöffnet oder mittels einer dünnen Wand, die eine geringe thermische Kapazität aufweist, gegenüber der Platine (2) abgeschlossen sind.

3. Vorrichtung nach Anspruch 1 oder 2, wobei die Heizelemente (40-1, 40-2, ..., 45-4) als Ohmscher Widerstand oder als Diode ausgestaltet sind.

4. Vorrichtung nach einem der Ansprüche 1 bis 3, wobei das Kühlelement (8) in Form einer Kühlrippenstruktur mit einer angeschlossenen Heatpipe, eines Ventilationssystems oder eines Peltier-Elements ausgestaltet ist.

5. Verfahren zum Steuern des Durchflusses eines Fluids durch n *= 2^{m}* mikrofluidische Kanäle (9, 10, ..., 16), wobei m eine natürliche Zahl > 0 ist und die Kanäle (9, 10, ..., 16) in ein Substrat (3) eingebracht sind, mit den Schritten
a) Einfrieren der mikrofluidischen Kanäle (9, 10, ..., 16) an ihren jeweils m Kontaktstellen mit jeweils einem Heizelement (40-1, 40-2, ..., 45-4), die somit jeweils ein Verschlusselement für die mikrofluidischen Kanäle (9, 10, ..., 16) ausbilden;
b) Anlegen eines digitalen Signals an m Steuerleitungen (50, 51, 52), wobei jede Steuerleitung entweder den Schaltzustand TRUE oder FALSE annimmt, so dass für jeder der m Steuerleitungen jeweils nur eine erste Leiterbahn (40, 42, 44) oder eine zweite Leiterbahn (41, 43, 45) unter Spannung steht, wodurch sich nur, wenn jede der m Kontaktstellen des jeweiligen Kanals mit jeder der durch die Steuerleitungen (50, 51, 52) angesteuerten Heizelemente durch Anlegen des Schaltzustands TRUE geöffnet wird, ein Heizelement an der betreffenden Kontaktstelle den mikrofluidischen Kanal auftaut und sich so der betreffende mikrofluidische Kanal öffnet;
c) Anlegen eines Flusses vom Einlass des jeweiligen mikrofluidischen Kanals zum Auslass des jeweiligen mikrofluidischen Kanals.

6. Verfahren nach Anspruch 5, wobei die mikrofluidischen Kanäle mittels eines Kühlelements (8), das an eine Platine (2) grenzt, auf der sich die die Leiterbahnen (40, 41,... 45) befinden, eingefroren werden.

7. Verwendung einer Vorrichtung nach einem der Ansprüche 1 bis 4 zur Führung von Flüssigkeiten, insbesondere von wässrigen Lösungen, Mittler- oder Trennmedien, für Anwendungen in der Medizintechnik oder Biotechnologie.
